# EUROPÄISCHE PATENTSCHRIFT

(11) **EP 2 009 600 B1**
(45) Veröffentlichungstag und Bekanntmachung des Hinweises auf die Patenterteilung: **29.06.2016**
(21) Anmeldenummer: 08009998.9
(22) Anmeldetag: 31.05.2008
(51) Int. Cl.: G07D 7/00, G07D 7/12

(54) **VERFAHREN ZUR IDENTIFIZIERUNG EINES TRANSPARENTEN OBJEKTS ANHAND SEINES ABSORPTIONSSPEKTRUMS**
METHOD FOR IDENTIFYING A TRANSPARENT OBJECT BASED ON ITS ABSORPTION SPECTRUM
PROCÉDÉ D'IDENTIFICATION D'UN OBJET TRANSPARENT À L'AIDE D'UN SPECTRE D'ABSORPTION

(30) Priorität: 29.06.2007 DE 102007030384
(43) Veröffentlichungstag der Anmeldung: 31.12.2008
(73) Patentinhaber: Siemens Healthcare Diagnostics Products GmbH, 35041 Marburg (DE)
(72) Erfinder: Slama, Michael, 35039 Marburg (DE)

(56) Entgegenhaltungen:
- DE-A1- 2 924 605
- US-A- 5 757 001
- US-A1- 2005 018 013
- US-A1- 2005 243 305
- US-A1- 2007 035 719
- US-B1- 6 595 427

## Beschreibung

Die vorliegende Erfindung betrifft ein Verfahren zur Identifizierung von transparenten Objekten und ermöglicht somit eine Sicherung von Gegenständen gegen Fälschung oder Nachahmung.

Die Feststellung der Authentizität eines Produktes ist angesichts zunehmender Produktpiraterie von großer wirtschaftlicher Bedeutung. Darüberhinaus ist insbesondere bei technischen Produkten oder Gegenständen, die als Komponente innerhalb eines technischen Systems verwendet werden, sicherzustellen, dass das Produkt bestimmte qualitative Eigenschaften aufweist, um das fehlerfreie Funktionieren eines Verfahrens oder einer Vorrichtung zu garantieren. In vielen technischen Bereichen ist es außerdem notwendig, bestimmte Qualitätsstandards zu gewährleisten, wodurch die Hersteller der betroffenen Gegenstände oder Systeme aufgefordert sind, Voraussetzungen zu schaffen, die eine Echtheitsprüfung von Gegenständen, Ersatzteilen und dergleichen ermöglichen.

Beispiele für transparente Gegenstände, deren Beschaffenheit ausschlaggebend ist für die Qualität des Verfahrens, in welchem sie eingesetzt werden, sind z. B. Messzellen, wie Küvetten, Küvettenrotoren oder Mikrotitrationsplatten, die in einem optischen Detektionsverfahren eingesetzt werden. Testverfahren zur Bestimmung klinisch relevanter Parameter, z. B. zur Diagnose von Gerinnungsparametern, werden häufig mit Hilfe photometrischer Detektionssysteme ausgewertet. Im klinischen Labor kommen hauptsächlich vollautomatische Analysegeräte zum Einsatz, die nicht nur eine automatische Abarbeitung der Testverfahren, sondern auch die Bestimmung standardisierter Testergebnisse ermöglichen. Um zu gewährleisten, dass die automatisierten Verfahren zuverlässige Testergebnisse liefern, ist es notwendig, dass alle Testrelevanten Einzelkomponenten spezifische, vom Hersteller vorgegebene Anforderungen erfüllen bzw. sich in dem Zustand befinden, der für den Gebrauch unbedingt erforderlich ist. Dies betrifft unter anderem auch die verwendeten Reaktionsgefäße bzw. Messzellen, wie z. B. Küvetten, Küvettenrotoren oder Mikrotitrationsplatten, in welchen sich die zu analysierenden Proben befinden, deren optische Eigenschaft bestimmt werden soll. Die vom Hersteller empfohlenen Reaktionsgefäße verfügen in der Regel nicht nur über spezifische konstruktive Eigenschaften, wie Form, Größe, Schichtdicke u. s. w., sondern bestehen üblicherweise aus einem Material, das im verwendeten Spektralbereich keine oder nur eine geringe Absorption zeigt. Bei der Verwendung von Plagiaten von Reaktionsgefäßen, die dem Anwender möglicherweise noch nicht einmal bewusst ist, besteht die Gefahr, dass es durch Unterschiede in der Materialbeschaffenheit zu starken Abweichungen oder Fehlern bei der Messung der Trübung oder des Streulichts kommen kann. Ein weiteres Risiko stellen Reaktionsgefäße dar, die aufgrund ihrer Materialeigenschaften Wechselwirkungen mit dem zu bestimmenden Analyten, der Probe oder dem Reaktionsansatz eingehen. Am Beispiel von gerinnungsdiagnostischen Verfahren wird diese Problematik besonders deutlich: ist die Oberfläche des Reaktionsgefäßes oder der Messzelle, die mit dem Reaktionsansatz in Kontakt kommt, so beschaffen, dass eine unkontrollierte Aktivierung der Gerinnung erfolgt, kann keine zuverlässige Bestimmung der Gerinnungsreaktion erfolgen. Fehlerhafte Messergebnisse sowie unkontrollierte Reaktionsbedingungen können zu Fehldiagnosen führen, die im ungünstigsten Falle schwerwiegende gesundheitliche Folgen für die betroffenen Patienten haben können.

Im Stand der Technik sind verschiedene Kennzeichnungsmethoden und korrespondierende optische Identifizierungsverfahren bekannt, die eine Markierung von Objekten oder auch von Dokumenten und die Erkennung von Falsifikaten erlauben und damit eine Sicherung der Gegenstände gegen Nachahmung ermöglichen.

In der Patentschrift DE 101 55 780 A1 wird ein Verfahren beschrieben, bei dem bei der Herstellung des zu sichernden Gegenstandes ein dreidimensionales, nichtreproduzierbares Zufallsmuster generiert wird, wie z. B. Partikel aus undurchsichtigem Material, die in einen transparenten Kunststoff eingestreut sind. Das körperliche Muster wird dann mit Hilfe eines Sensors abgetastet und als kennzeichnendes Merkmal abgespeichert. In der Patentschrift US 5,719,939 wird insbesondere die Verwendung von lose zusammenliegenden, nicht verwebten Fasern (Vliese) in einem transparenten Material beschrieben.

In der Patentschrift EP 0 772 843 B1 wird ein Verfahren beschrieben, bei dem bei der Herstellung des zu sichernden Gegenstandes durch Aufrauhen eine dreidimensionale Markierung auf der Oberfläche des Objekts hergestellt wird. Das Muster wird dann mit Hilfe bildgebender bzw. bildverarbeitender Systeme analysiert und abgespeichert. Ein ähnliches Verfahren ist in der Patentschrift DE 32 16 867 C2 beschrieben. Hier wird ein Gegenstand ebenfalls anhand von topographischen Oberflächenmerkmalen identifiziert, wobei Höhen und Abstände der Unebenheiten digital ausgemessen und analysiert werden.

In der Patentanmeldung DE 40 00 197 A1 werden Wertmarken und Vorrichtungen zu deren Validierung beschrieben. Bei den die Wertmarken charakterisierenden Kennzeichen handelt es sich um lichtbeugende Vertiefungen in der Oberfläche der Wertmarke, wie z. B. prismatische Facetten, reflektierende Facetten oder Beugungsgitter. Die Wertmarken werden mit Hilfe eines optischen Sensors, der die Position und die Intensität eines abgelenkten Lichtstrahls misst, auf ihre Gültigkeit geprüft.

Ein schwerwiegender Nachteil der beschriebenen Verfahren zur Kennzeichnung und Identifizierung von Gegenständen besteht darin, dass durch die Markierungen, z. B. durch Einstreuen undurchsichtiger Partikel oder durch die Bearbeitung der Oberfläche, die optischen Eigenschaften des Gegenstandes erheblich verändert werden. Derartige Verfahren eignen sich somit nicht für die Kennzeichnung von Gegenständen, an deren optische Eigenschaften spezifische Anforderungen gestellt werden, insbesondere nicht für die Kennzeichnung transparenter Gegenstände, die Bestandteil eines optischen Testverfahrens sind.

Der vorliegenden Erfindung lag also die Aufgabe zugrunde, ein Verfahren bereitzustellen, das die Identifizierung von transparenten Objekten mit spezifischen optischen Eigenschaften bzw. die Identifizierung von Falsifikaten ermöglicht. Weiterhin sollte die Kennzeichnung der transparenten Objekte sich vornehmlich dadurch auszeichnen, dass sie, erstens, den eigentlichen Verwendungszweck des Objekts nicht beeinträchtigt, zweitens, ohne großen technischen Aufwand und kostengünstig zu erzeugen ist und drittens, schwer nachzuahmen ist.

Unter dem Begriff "Identifizierung" im Sinne der vorliegenden Erfindung ist die Bestimmung der Identität eines Objekts in Bezug auf ein Merkmal eines Referenzobjektes zu verstehen.

Die Lösung der Aufgabe besteht in der Bereitstellung der in den Ansprüchen beschriebenen erfindungsgemäßen Verfahren.

Die vorliegende Erfindung betrifft ein Verfahren zur Identifizierung eines transparenten Objekts anhand seines Absorptionsspektrums bzw. zur Prüfung der Echtheit eines transparenten Objekts. Das Verfahren eignet sich insbesondere zur Identifizierung bzw. zur Prüfung der Echtheit von transparenten Messzellen, Küvetten, Küvettenrotoren, Mikrotitrationsplatten oder Kapillaren. Üblicherweise bestehen transparente Objekte wie Küvetten, Küvettenrotoren, Mikrotitrationsplatten oder Kapillaren, die in einem photometrischen Detektionssystem verwendet werden, aus einem Material, das im verwendeten Spektralbereich keine oder eine möglichst geringe Absorption zeigen. Gemäß der vorliegenden Erfindung besteht das zu identifizierende Objekt aus einem Material, das mindestens eine, bevorzugterweise mindestens zwei lichtabsorbierende Substanzen (Farbmittel) enthält.

Bei dem Material, aus dem der zu identifizierende transparente Gegenstand besteht, kann es sich um Glas oder um einen Kunststoff handeln. Das erfindungsgemäße Verfahren eignet sich besonders zur Identifizierung von transparenten Objekten, die aus Quarzglas bestehen, insbesondere Quarzglas, das aus natürlichem Kristall (Bergkristall) erschmolzen wurde, synthetisches Quarzglas, das keine OH-Absorption aufweist (z. B. SUPRASIL® 300, Heraeus Quarzglas GmbH, Hanau, Deutschland) oder die aus Kronglas mit hohem Anteil an Kaliumoxid oder die aus Borosilikatglas bestehen (z. B. Borofloat®, Schott AG, Mainz, Deutschland). Das erfindungsgemäße Verfahren eignet sich weiterhin zur Identifizierung von transparenten Objekten, die aus Kunststoff bestehen, insbesondere aus einem Kunststoff aus der Gruppe Polypropylen, Polystyrol, Polyethylen, Polyvinylchlorid, Polymethylmethacrylat und Polyethylenterephthalat.

Bei den Farbmitteln kann es sich um lösliche Farbstoffe und/oder unlösliche Pigmente handeln, die dem Glas oder dem Kunststoff vor oder während der Verarbeitung zugegeben werden können, so dass ein homogen farbiges Material entsteht. Handelt es sich bei dem zu identifizierenden transparenten Gegenstand um eine Messzelle, die in einem optischen Testverfahren eingesetzt werden soll, so ist bei der Verwendung von Farbmitteln darauf zu achten, dass die Messzelle anschließend eine ausreichende spektrale Durchlässigkeit aufweist, um zweckgemäß in dem optischen Messverfahren verwendet werden zu können.

Für die Färbung von zu identifizierenden transparenten Gegenständen bzw. für die Färbung des transparenten Materials kann eine Fülle von dem Fachmann bekannten Farbstoffen verwendet werden. Die wichtigste Klasse synthetischer Farbstoffe sind die Azofarbstoffe. Azofarbstoffe besitzen die allgemeine Formel R-N=N-R', wobei N für Stickstoff und R beziehungsweise R' für einen organischen Rest, bevorzugt für einen aromatischen Kohlenwasserstoff, steht. Die Azofarbstoffe zeichnen sich durch große Farb- und Lichtechtheit aus. Sie werden häufig als Farbstoffkonzentrate in polymeren Trägern, sogenannten Masterbatches, angeboten und können vor der Fertigung von Plastikteilen, wie z. B. von Küvetten, der Kunststoffmasse in der gewünschten Konzentration beigemischt werden.

Bekanntermaßen setzt sich das Absorptionsspektrum einer Mischung mehrerer lichtabsorbierender Komponenten ("Farbmittel") additiv aus den Absorptionsspektren der einzelnen Komponenten zusammen. Das resultierende, charakteristische Absorptionsspektrum der Mischung unterscheidet sich von den Absorptionsspektren der einzelnen Komponenten. Die erfindungsgemäße Kennzeichnung eines transparenten Objekts bzw. die Sicherung gegen Fälschung oder Nachahmung besteht also darin, dass zur Herstellung des transparenten Objekts ein Material verwendet wird, das aufgrund der Verwendung von mindestens einer, bevorzugterweise von mindestens zwei lichtabsorbierenden Substanzen über ein charakteristisches Absorptionsspektrum verfügt. Bevorzugterweise wird die Konzentration der Farbmittel so gewählt, dass sie so niedrig ist, dass sie den dynamischen Messbereich des optischen Detektionssystems nicht übermäßig einschränkt und dass sie jedoch hoch genug ist, so dass eine Absorption noch zuverlässig gemessen werden kann. Der besondere Vorteil dieser Kennzeichnung besteht darin, dass sie nur relativ schwer nachzuahmen ist. Der Aufwand, der in Unkenntnis der Art und der Konzentrationen der verwendeten Farbmittel betrieben werden müsste, um ein Material mit identischem Absorptionsspektrum herzustellen, würde eine Nachahmung praktisch unrentabel machen.

Beschrieben wird auch eine Messzelle, beispielsweise in Form einer Küvette, eines Küvettenrotors, einer Mikrotitrationsplatte oder einer Kapillare, die sich zur Verwendung in einem photometrischen Detektionssystem eignet. Eine solche Messzelle besteht aus einem transparenten Material, bevorzugterweise Glas oder Kunststoff, das mindestens eine, bevorzugterweise mindestens zwei, lichtabsorbierende Substanzen (Farbmittel) enthält und daher ein charakteristisches Absorptionsspektrum aufweist. Vorzugsweise handelt es sich bei der mindestens einen lichtabsorbierenden Substanz um einen Azofarbstoff.

Das erfindungsgemäße Verfahren zur Identifizierung eines transparenten Objektes ist weiterhin dadurch gekennzeichnet, dass die Absorption des transparenten Objekts bei mindestens zwei unterschiedlichen Wellenlängen gemessen wird und die Absorptionsmesswerte mit zuvor ermittelten, für das zu identifizierende Objekt charakteristischen Absorptionsmesswerten, die als Referenzwerte gespeichert wurden, verglichen wird. Der Vergleich der Absorptionsmesswerte des zu identifizierenden Objekts mit den Referenzwerten, d. h. die Prüfung auf Echtheit des Objekts, erfolgt bevorzugt unter Verwendung sogenannter Mustererkennungstechniken.

Mustererkennungstechniken sind multivariate Auswertungsverfahren, die es ermöglichen, mindestens zwei Variable, hier Absorptionsmesswerte, gleichzeitig auszuwerten. Beispiele für Mustererkennungstechniken, die sich zur Verwendung in dem erfindungsgemäßen Verfahren eignen, sind Principal Component Analysis (PCA), Soft Independent Modeling of Class Analogy (SIMCA), Artificial Neural Network (ANN), Diskriminanzanalyse und Abwandlungen der genannten Techniken (siehe z. B. Martens, H. & T Naes: Multivariate calibration. John Wiley & Sons Ltd, 1989, ISBN 0 471 90979 3; Otto, M.: Chemometrie. VCH, 1997, ISBN 3 527 28849 X; Zell, A.: Simulation Neuronaler Netze. Addison Wesley, 1994, ISBN 3 89319 554 8).

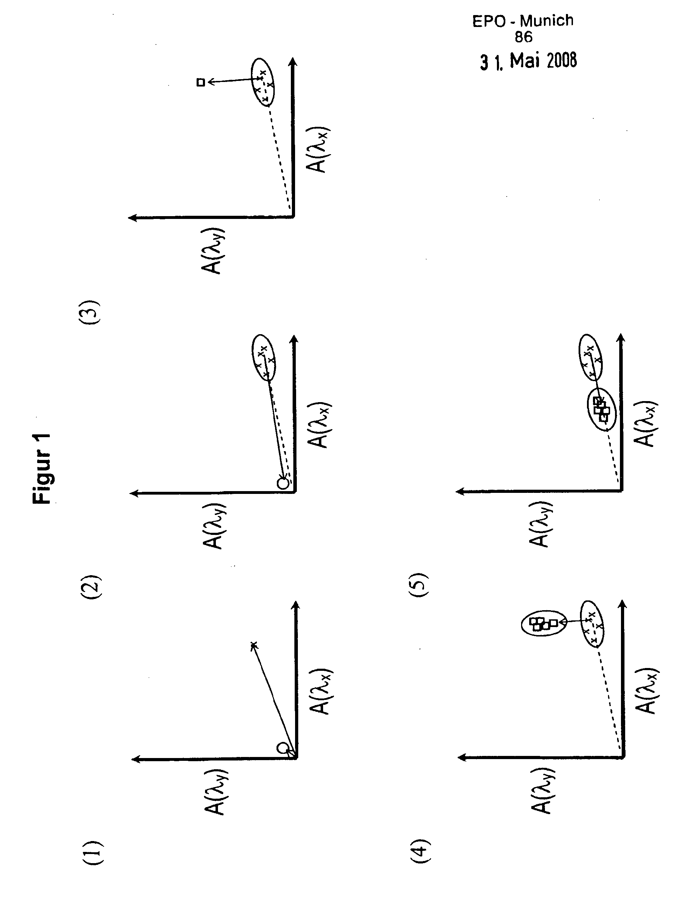

Trägt man die für ein Objekt gemessenen Absorptionswerte in ein Koordinatensystem ein, dessen Dimensionalität der Anzahl der verwendeten Wellenlängen entspricht, so befindet sich das Objekt entsprechend dem Absorptionsverhalten an einem definierten Ort im höherdimensionalen Raum. Ein Objekt, das keine oder eine nur sehr geringe Absorption aufweist, hätte in diesem Raum ihren Platz nahe dem Ursprung des Koordinatensystems (siehe Fig. 1(1)). Eine Entscheidung über Identität oder Unterschied eines zu identifizierenden Objekts mit einem Referenzobjekt kann im einfachsten Fall über den euklidischen Abstand oder den Mahalanobis Abstand zwischen Referenzobjekt und zu identifizierendem Objekt getroffen werden (siehe auch Jugulum, R. und Monplaisir, L. [2002] Comparison between Mahalanobis-Taguchi System and Artificial Neural Networks. Quality Engineering 10, 60-73).

Bevorzugterweise wird die Lage des zu identifizierenden Objekts nicht nur mit der Lage eines einzigen Referenzobjekts verglichen, sondern mit einer Referenzklasse. Eine Referenzklasse besteht aus einer Sammlung mehrerer Messungen nach einmaliger Kalibration unter Verwendung von mehreren Geräten und mehreren Chargen des betreffenden transparenten Objektes zur Abbildung der Varianz. Der Vergleich erfolgt durch den Vektor, der vom Schwerpunkt der Referenzklasse zu dem zu identifizierenden Objekt zeigt. Der Betrag des Vektors wird anschließend in Relation zur Verteilung der Referenzklasse gesetzt und mit Methoden der Statistik bewertet, z. B. durch die Bestimmung des Abstands vom Mittelpunkt der Referenzklasse unter Berücksichtigung der Varianz. Im Ergebnis erhält man eine Beurteilung, ob sich das zu identifizierende Objekt signifikant von der Referenzklasse unterscheidet.

Wird neben dem Betrag des Differenzvektors und der Verteilung der Referenzklasse auch die Richtung des Differenzvektors berücksichtigt, können bei Abweichung des zu identifizierenden Objekts zusätzliche Aussagen getroffen werden. Unterscheiden lassen sich Objekte, die eine falsche lichtabsorbierende Komponente bzw. eine falsche Konzentration einer lichtaborbierenden Komponente enthalten, sowie Objekte, die z. B. Materialfehler aufweisen, wie eine abweichende Wanddicke_oder Kratzer, die den einfallenden Lichtstrahl streuen.

Eine besondere Ausführungsform des erfindungsgemäßen Verfahrens besteht darin, dass eine Gruppe mehrerer identischer zu identifizierender transparenter Objekte zu einer Klasse mit eigener Verteilung zusammengefasst wird. Unter dem Begriff "identische transparente Objekte" ist eine Gruppe von Objekten des gleichen Typs zu verstehen, die über die gleichen Absorptionseigenschaften verfügen sollten. Fasst man z. B. jeweils die letzten 10 Proben einer langen Messreihe zu einer Klasse, einer sogenannten Prüfklasse, zusammen und vergleicht den Abstand zur Referenzklasse unter Berücksichtigung der Verteilung, so erhält man ein Entscheidungskriterium, das von zufälligen Schwankungen relativ unbeeinflusst ist (siehe Fig. 1(4) und (5)).

Gegenstand der Erfindung ist demnach weiterhin ein Verfahren zur Prüfung der Echtheit von mehreren identischen transparenten Objekten, die mindestens eine lichtabsorbierende Substanz enthalten. Dazu wird die Absorption mehrerer transparenter Referenzobjekte bei jeweils mindestens zwei unterschiedlichen Wellenlängen bestimmt. Die Absorptionsmesswerte werden als Referenzwerte gespeichert, und aus den Referenzwerten wird eine Referenzklasse gebildet. Die Absorption jedes der auf auf Echtheit zu prüfenden Objekte wird bei den mindestens zwei unterschiedlichen Wellenlängen bestimmt. Die Absorptionsmesswerte werden gespeichert, und aus den Absorptionsmesswerten der Objekte wird eine Prüfklasse gebildet. Anschließend werden die Werte der Prüfklasse mit den Werten der Referenzklasse verglichen. Bevorzugterweise erfolgt der Vergleich der Werte der Prüfklasse mit den Werten der Referenzklasse mit Hilfe eines multivariaten Auswerteverfahrens. Der Vergleich der Werte der Prüfklasse mit den Werten der Referenzklasse kann durch ein Abstandsmaß, z. B. aus der Gruppe euklidischer Abstand oder Mahalanobis Abstand erfolgen.

Bevorzugterweise wird das erfindungsgemäße Verfahren automatisch durchgeführt. Im Falle transparenter Reaktionsgefäße, die für eine Verwendung in einem optischen Analysegerät vorgesehen sind, erfolgt die Überprüfung der Echtheit der Reaktionsgefäße bevorzugterweise bevor Probenflüssigkeit oder Testreagenzien in die Reaktionsgefäße aliquotiert werden. Die Messung der Absorption der Reaktionsgefäße erfolgt bevorzugterweise in einem Photometer, wobei eine Lichtquelle einen Lichtstrahl durch die zu überprüfenden Reaktionsgefäße sendet, und ein Detektor die Intensität des durchgetretenen Lichts misst und in ein elektrisches Signal umwandelt. Besonders bevorzugt wird ein Photometer verwendet, das jede gewünschte Wellenlänge zwischen λ = 220 und 1000 nm, bevorzugt zwischen λ = 380 und 900 nm, zur Verfügung stellt, so dass die erforderlichen Absorptionsmessungen bei unterschiedlichen Wellenlängen in rascher Folge nacheinander durchgeführt werden können. Bei den Lichtquellen kann es sich um polychromatische Lichtquellen handeln, wobei das Licht dann mit Hilfe eines Beugungsgitters spektral dispergiert werden muss, oder es kann eine Kombination von mehreren monochromatischen Lichtquellen verwendet werden, wie z. B. Laser oder Leuchtdioden (LEDs).

Wird bei der erfindungsgemäßen Echtheitsprüfung festgestellt, dass die Absorptionsmesswerte des zu prüfenden Objekts innerhalb eines vorab festgelegten Akzeptanzbereichs der Absorptionsmesswerte der Referenzklasse liegen, wird das Objekt für den weiteren Verwendungszweck zugelassen. Wird hingegen festgestellt, dass die Absorptionsmesswerte eines zu prüfenden Objekts außerhalb eines vorab festgelegten Akzeptanzbereichs der Absorptionsmesswerte der Referenzklasse liegen, wird das Objekt für den weiteren Verwendungszweck nicht zugelassen.

Eine Vorrichtung, die imstande ist, das erfindungsgemäße Verfahren zur Prüfung der Echtheit eines transparenten Objekts automatisch durchzuführen zeichnet sich dadurch aus, dass sie a) über Mittel zur Messung der Absorption eines transparenten Gegenstands bei mindestens zwei Wellenlängen (z. B. ein Photometer), b) Mittel zur Speicherung der Messwerte bzw. -daten (z. B. einen Halbleiterspeicher, ein optisches oder magnetisches Speichermedium wie bspw. eine Festplatte) und c) Mittel zur Steuerung der Durchführung des Vergleichs der Absorptionsmesswerte des auf Echtheit zu prüfenden transparenten Objekts mit den Werten der Referenzklasse (z. B. Software, Computerprogramm, Algorithmus) verfügt oder über Mittel zur Steuerung der Durchführung des Vergleichs der Werte einer Prüfklasse mehrerer identischer transparenter Objekten mit den Werten einer Referenzklasse.

In einer bevorzugten Ausführungsform handelt es sich bei dem Mittel c) um ein Mittel zur Durchführung eines multivariaten Auswerteverfahrens (z. B. Software, Computerprogramm, Algorithmus).

Bevorzugterweise verfügt das Gerät zusätzlich über Mittel zur Ausgabe von Messergebnissen (z. B. ein elektronisches Anzeigegerät, einen Monitor, einen Datenschreiber, einen Drucker und/oder Datenfernleitung).

### Figurenbeschreibung

**Figur 1**
   Figur 1 veranschaulicht das Prinzip der Mustererkennung mit zwei Variablen. A(λₓ) entspricht der Absorption eines zu identifizierenden Objekts bei einer Wellenlänge λₓ. A(λ_{y}) entspricht der Absorption eines zu identifizierenden Objekts bei einer Wellenlänge λ_{y}. (1) Ursprungsvektor zu Referenz (x) und Stichprobe (Kreis). Als Stichprobe wurde eine farblose Standardküvette verwendet. (2) Der Vektor vom Schwerpunkt der Referenzklasse zur Stichprobe hat die Länge des Ursprungsvektors und zeigt in Richtung des Ursprungs. (3) Der Vektor von der Referenzklasse zur Stichprobe (Viereck) bei Verwendung von anderen lichtabsorbierenden Komponenten ("Farbmitteln"). (4) Vergleich von Referenzklasse und Stichprobenklasse. Andere Farbmittel in der Stichprobenklasse. (5) Vergleich von Referenzklasse und Stichprobenklasse. Dünnere Wandstärke der Küvetten der Stichprobenklasse oder unterschiedliche Konzentration der Farbmittel.
**Figur 2**

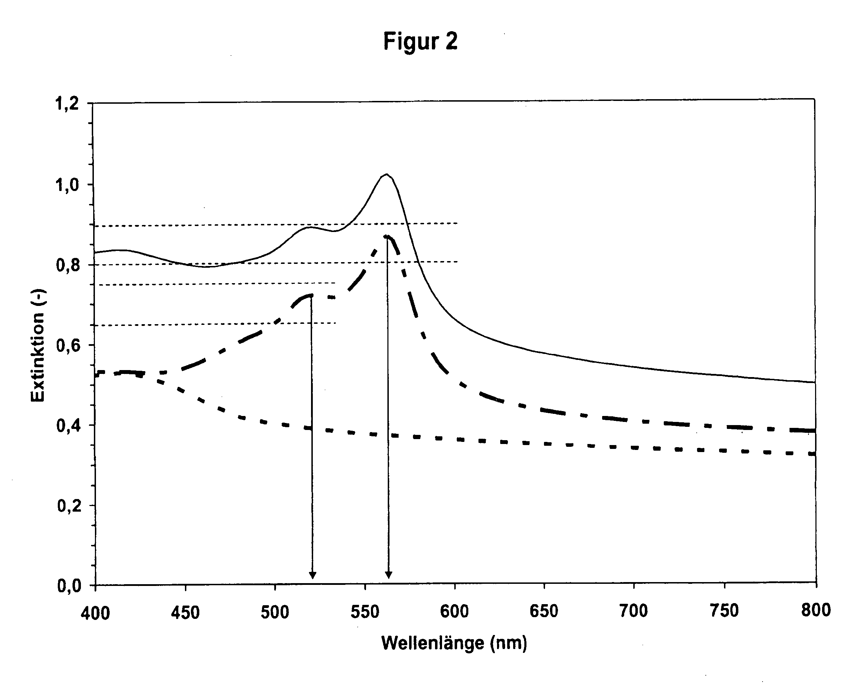

   Figur 2 zeigt das Absorptionsspektrum drei verschiedenfarbiger Kunststoffküvetten (siehe Beispiel 1). Gelbe Farbfolie (Typ 2): gepunktete Linie; rote Farbfolie (Typ 3): gestrichelte Linie; gelbe und rote Farbfolie übereinander (Typ 4): durchgezogene Linie.

Die folgenden Ausführungsbeispiele dienen der Veranschaulichung der vorliegenden Erfindung und sind nicht als Einschränkung zu verstehen.

### Beispiel 1

Auf farblose transparente Kunststoffküvetten (Uvette®, Eppendorf, Hamburg, Deutschland) wurden dünne farbige transparente Folien aus eingefärbtem Polypropylen (Leitz Prospekthüllen; 150 µm dicke, transparente PVC-Hartfolien) aufgeklebt:

| | |
|---|---|
| Typ 1: | ohne Farbfolie |
| Typ 2: | gelbe Farbfolie |
| Typ 3: | rote Farbfolie |
| Typ 4: | gelbe und rote Farbfolie übereinander. |

Mit den Küvetten wurde dann in einem Spektrophotometer (Perkin Elmer) ein Spektrum im sichtbaren Bereich aufgenommen (s. Fig. 2).

Es wird beispielhaft für Küvetten des Typs 3 beschrieben, wie die Überprüfung der Küvette vor Gebrauch durchgeführt wurde. Hierzu diente der folgende Algorithmus:
1. Messung der Absorption bei 566 nm (siehe rechter Pfeil),
2. Messung der Absorption bei 516 nm (siehe linker Pfeil),
3. Akzeptieren der Küvette nur dann, wenn:
   o A_{566 nm} > 0.80 (siehe Hilfslinie in Fig. 2) und
   o A_{566 nm} < 0.90 (siehe Hilfslinie in Fig. 2) und
   o A_{516 nm} > 0.65(siehe Hilfslinie in Fig. 2) und
   o A_{516 nm} < 0.75 (siehe Hilfslinie in Fig. 2).

Andernfalls wurde die Küvette verworfen.

Zur Bestimmung einer Gerinnungsreaktion in einer Küvette des Typs 3 wurde die Küvette zunächst auf 37 °C temperiert, und es wurden 75 µL Normalplasma und 150 µL isotonische Saline in die Küvette pipettiert. Danach wurden 450 µL eines Prothrombinzeitreagenzes (Innovin®, Dade Behring Marburg GmbH, Marburg, Deutschland) zugegeben und die Reaktion wurde bei 405 nm kontinuierlich bestimmt. Eine Gerinnungsreaktion ist auch in einer gefärbten Küvette problemlos messbar.

## Patentansprüche

1. Verfahren zur Prüfung der Echtheit einer aus einem transparenten Material bestehenden Messzelle, die sich zur Verwendung in einem photometrischen Detektionssystem eignet und wobei das transparente Material mindestens eine lichtabsorbierende Substanz enthält, **gekennzeichnet durch** folgende Schritte:
a) Messung der Absorption mehrerer transparenter Referenzobjekte bei jeweils mindestens zwei unterschiedlichen Wellenlängen, Speicherung der Absorptionsmesswerte als Referenzwerte und Bildung einer Referenzklasse;
b) Messung der Absorption der auf Echtheit zu prüfenden Messzelle bei den in Schritt a) verwendeten Wellenlängen;
c) Vergleich der Absorptionsmesswerte der auf Echtheit zu prüfenden Messzelle mit den Werten der Referenzklasse.

2. Verfahren nach Anspruch 1 zur Prüfung der Echtheit von mehreren identischen aus einem transparenten Material bestehenden Messzellen, die sich zur Verwendung in einem photometrischen Detektionssystem eignen, wobei das transparente Material mindestens eine lichtabsorbierende Substanz enthält, umfassend:
b') Messung der Absorption der auf Echtheit zu prüfenden Messzellen bei den in Schritt a) verwendeten Wellenlängen; Speicherung der Absorptionsmesswerte und Bildung einer Prüfklasse;
c') Vergleich der Werte der Prüfklasse mit den Werten der Referenzklasse.

3. Verfahren gemäß einem der Ansprüche 1 oder 2, wobei das transparente Material einer auf Echtheit zu prüfenden Messzelle mindestens zwei lichtabsorbierende Substanzen enthält.

4. Verfahren gemäß einem der Ansprüche 1 bis 3, wobei das transparente Material einer auf Echtheit zu prüfenden Messzelle mindestens eine lichtabsorbierende Substanz aus der Gruppe der Azofarbstoffe enthält.

5. Verfahren gemäß einem der Ansprüche 1 bis 4, wobei die Messung der Absorption bei mindestens zwei unterschiedlichen Wellenlängen aus dem Bereich von 220 bis 1000 nm erfolgt.

6. Verfahren gemäß einem der Ansprüche 1 bis 5, wobei die Anzahl der Referenzobjekte größer ist als die Anzahl der verwendeten Wellenlängen.

7. Verfahren gemäß einem der Ansprüche 1 und 4 bis 6, wobei der Vergleich der Absorptionsmesswerte der auf Echtheit zu prüfenden transparenten Messzelle mit den Werten der Referenzklasse durch ein Abstandsmaß erfolgt.

8. Verfahren gemäß Anspruch 7, wobei der Vergleich der Absorptionsmesswerte der auf Echtheit zu prüfenden transparenten Messzelle mit dem Schwerpunkt der Werte der Referenzklasse durch ein Abstandsmaß erfolgt.

9. Verfahren gemäß einem der Ansprüche 2 bis 6, wobei der Vergleich der Werte der Prüfklasse mit den Werten der Referenzklasse durch ein Abstandsmaß erfolgt.

10. Verfahren gemäß Anspruch 9, wobei der Schwerpunkt der Werte der Prüfklasse mit dem Schwerpunkt der Werte der Referenzklasse durch ein Abstandsmaß erfolgt.

11. Verfahren gemäß einem der Ansprüche 7 bis 10, wobei das Abstandsmaß gewählt ist aus der Gruppe i) euklidischer Abstand und ii) Mahalanobis Abstand.

12. Verfahren gemäß einem der Ansprüche 1 und 3 bis 6, wobei der Vergleich der Absorptionsmesswerte der auf Echtheit zu prüfenden transparenten Messzelle mit den Werten der Referenzklasse mit Hilfe eines multivariaten Auswerteverfahrens erfolgt.

13. Verfahren gemäß einem der Ansprüche 2 bis 6, wobei der Vergleich der Werte der Prüfklasse mit den Werten der Referenzklasse mit Hilfe eines multivariaten Auswerteverfahrens erfolgt.

14. Verfahren gemäß einem der Ansprüche 12 und 13, wobei das multivariate Auswerteverfahren aus der Gruppe Principal Component Analysis (PCA), Soft Independent Modeling of Class Analogy (SIMCA), Artificial Neural Network (ANN), Mahalanobis-Taguchi System (MTS) ausgewählt ist.

## Claims

1. Method for testing the authenticity of a measurement cell consisting of a transparent material, which is suitable for use in a photometric detection system, and wherein the transparent material contains at least one light-absorbing substance, **characterized by** the following steps:
a) measuring the absorption of a plurality of transparent reference objects respectively at least at two different wavelengths, storing the absorption measurement values as reference values and forming a reference class;
b) measuring the absorption of the measurement cell to be tested for authenticity at the wavelengths used in step a) ;
c) comparing the absorption measurement values of the measurement cell to be tested for authenticity with the values of the reference class.

2. Method according to Claim 1 for testing the authenticity of a plurality of identical measurement cells consisting of a transparent material, which are suitable for use in a photometric detection system, wherein the transparent material contains at least one light-absorbing substance, comprising:
b') measuring the absorption of the measurement cells to be tested for authenticity at the wavelengths used in step a) ; storing the absorption measurement values and forming a test class;
c') comparing values of the test class with the values of the reference class.

3. Method according to one of Claims 1 and 2, wherein the transparent material of a measurement cell to be tested for authenticity contains at least two light-absorbing substances.

4. Method according to one of Claims 1 to 3, wherein the transparent material of a measurement cell to be tested for authenticity contains at least one light-absorbing substance from the azo dye group.

5. Method according to one of Claims 1 to 4, wherein the absorption measurement is carried out at least at two different wavelengths in the range of from 220 to 1000 nm.

6. Method according to one of Claims 1 to 5, wherein the number of reference objects is greater than the number of wavelengths used.

7. Method according to one of Claims 1 and 4 to 6, wherein the absorption measurement values of the transparent measurement cell to be tested for authenticity are compared with the values of the reference class by using a distance measure.

8. Method according to Claim 7, wherein the absorption measurement values of the transparent measurement cell to be tested for authenticity are compared with the centroid of the values of the reference class by using a distance measure.

9. Method according to one of Claims 2 to 6, wherein the values of the test class are compared with the values of the reference class by using a distance measure.

10. Method according to Claim 9, wherein the values of the test class are compared with the centroid of the values of the reference class by using a distance measure.

11. Method according to one of Claims 7 to 10, wherein the distance measure is selected from the group i) Euclidean distance and ii) Mahalanobis distance.

12. Method according to one of Claims 1 and 3 to 6, wherein the absorption measurement values of the transparent measurement cell to be tested for authenticity are compared with the values of the reference class with the aid of a multivariate evaluation method.

13. Method according to one of Claims 2 to 6, wherein the values of the test class are compared with the values of the reference class with the aid of a multivariate evaluation method.

14. Method according to one of Claims 12 and 13, wherein the multivariate evaluation method is selected from the group principal component analysis (PCA), soft independent modeling of class analogy (SIMCA), artificial neural network (ANN), Mahalanobis-Taguchi system (MTS).

## Revendications

1. Procédé de contrôle de la bonne qualité d'une cellule de mesure en un matériau transparent, qui convient à l'utilisation dans un système de détection photométrique et dans lequel le matériau transparent contient au moins une substance absorbant la lumière, **caractérisé par** les stades suivants:
a) mesure de l'absorption de plusieurs objets témoins transparents à respectivement au moins deux longueurs d'onde différentes, mémorisation des valeurs de mesure de l'absorption comme valeurs témoins et formation d'une classe témoin;
b) mesure de l'absorption de la cellule de mesure, dont on doit contrôler la bonne qualité, aux longueurs d'onde utilisées au stade a);
c) comparaison des valeurs de mesure de l'absorption de la cellule de mesure dont on doit contrôler la bonne qualité aux valeurs de la classe témoin.

2. Procédé suivant la revendication 1 de contrôle de la bonne qualité de plusieurs cellules de mesure pareilles en un matériau transparent, qui conviennent à l'utilisation dans un système de détection photométrique, dans lequel le matériau transparent contient au moins une substance absorbant la lumière, comprenant:
b') mesure de l' absorption des cellules de mesure, dont on doit contrôler la bonne qualité, aux longueurs d_{'}onde utilisées au stade a); mémorisation des valeurs de mesure de l'absorption et formation d'une classe témoin ;
c') comparaison des valeurs de la classe de contrôle aux valeurs de la classe témoin.

3. Procédé suivant l'une des revendications 1 ou 2, dans lequel le matériau transparent d'une cellule de mesure, dont on doit contrôler la bonne qualité, contient au moins deux substances absorbant la lumière.

4. Procédé suivant l'une des revendications 1 à 3, dans lequel le matériau transparent d'une cellule de mesure dont on doit contrôler la bonne qualité contient au moins une substance absorbant la lumière du groupe des colorants azoïques.

5. Procédé suivant l'une des revendications 1 à 4, dans lequel on effectue la mesure de l'absorption à au moins deux longueurs d'onde différentes dans la plage de 220 à 1 000 nm.

6. Procédé suivant l'une des revendications 1 à 5, dans lequel le nombre des objets témoins est plus grand que le nombre des longueurs d'onde utilisées.

7. Procédé suivant l'une des revendications 1 et 4 à 6, dans lequel on effectue la comparaison des valeurs de mesure de l'absorption de la cellule de mesure transparente dont on doit contrôler la bonne qualité aux valeurs de la mesure de la classe témoin par une mesure de distance.

8. Procédé suivant la revendication 7, dans lequel on effectue la comparaison des valeurs de mesure de l'absorption de la cellule de mesure transparente, dont on doit contrôler la bone qualité, au centre de gravité des valeurs de la classe témoin par une mesure de distance.

9. Procédé suivant l'une des revendications 2 à 6, dans lequel on effectue la comparaison des valeurs de la classe de contrôle aux valeurs de la classe témoin par une mesure de distance.

10. Procédé suivant la revendication 9, dans lequel on effectue la comparaison du centre de gravité des valeurs de la classe de contrôle au centre de gravité des valeurs de la classe témoin par une mesure de distance.

11. Procédé suivant l'une des revendications 7 à 10, dans lequel on choisit la mesure de distance dans le groupe i) de la distance euclidienne et ii) de la distance de mahalanobis .

12. Procédé suivant l'une des revendications 1 et 3 à 6, dans lequel on effectue la comparaison des valeurs de mesure de l'absorption de la cellule de mesure transparente dont on doit contrôler la bonne qualité aux valeurs de mesure de la classe témoin à l'aide d'un procédé d'évaluation à

13. Procédé suivant l'une des revendications 2 à 6, dans lequel on effectue la comparaison des valeurs de la classe de contrôle aux valeurs de la classe témoin à l'aide d'un procédé d'évaluation à plusieurs variables.

14. Procédé suivant l'une des revendications 12 et 13, dans lequel on choisit le procédé d'évaluation à plusieurs variable dans le groupe Principal Component Analyse (PCA), Soft Independent Modeling of Class Analogy (SIMCA), Artificial. Neural Network (ANN), Mahalanobis-Taguchi System (MTS).
